# EUROPEAN PATENT SPECIFICATION

(11) **EP 1 765 722 B1**
(45) Date of publication and mention of the grant of the patent: **15.08.2012**
(21) Application number: 05748787.8
(22) Date of filing: 17.06.2005
(51) Int. Cl.: F16K 1/30

(54) **A FILLING MEANS AND A METHOD OF EVACUATING, PRESSURE-FILLING AND LEVELLING GAS OR LIQUID TO CLOSED CIRCUITS**
FÜLLMITTEL UND VERFAHREN ZUR ENTLEERUNG, DRUCKFÜLLUNG UND NIVELLIERUNG VON GAS ODER FLÜSSIGKEIT IN GESCHLOSSENEN KREISLÄUFEN
MOYENS DE REMPLISSAGE ET PROCEDE D'EVACUATION, DE REMPLISSAGE PRESSION ET DE MISE A NIVEAU D'UN GAZ OU LIQUIDE DANS DES CIRCUITS FERMES

(30) Priority: 21.06.2004 DK 200400970; 14.12.2004 DK 200401930
(43) Date of publication of application: 28.03.2007
(73) Proprietor: Agramkow Fluid Systems A/S, 6400 Sønderborg (DK)
(72) Inventor: CLAUSEN, Tove, Agramkow Fluid Systems A/S, 6400 Sonderborg (DK); KLIETSCH, Morten, Agramkow Fluid Systems A/S, 6400 Sonderborg (DK)
(74) Representative: Larsen, Hans Ole
(86) International application number: PCT/DK2005/000398
(87) International publication number: WO 2005/123572

(56) References cited:
- US-A- 6 029 720
- US-A1- 2003 226 598
- US-A1- 2004 084 082
- US-B1- 6 257 285
- US-B1- 6 298 886

## Description

### The prior art

The invention relates to a filling means for evacuating, pressure-filling and levelling gas or liquid for closed circuits, such as in cooling systems, as well as a method of evacuating, pressure-filling and levelling gas or liquid when filling closed circuits using a flling means according to the invention.

It applies to such circuits in particular that there is access to the circuit only via the reservoir of the circuit, and correct filling therefore requires that the circuit is evacuated before liquid can be filled under pressure.

To pay the greatest possible regard to the usefulness of the product, particularly three conditions should be taken into consideration.

The result and/or quality of the process performed depends on the vacuum and/or pressure level as well as on optimum flow conditions, which optimum flow conditions may be a low Kv value and a great flow.

As the physical means of access to the reservoir are very limited, it is not possible to use manipulators which have a too great physical extent, and as the space at the filling locations is very restricted, an ergonomic configuration of the filling means for the sake of the operator is extremely difficult to achieve.

To ensure good serviceability, it is important to have a short repair time when parts are repaired as well as replaced. In addition, it is important that the equipment exhibits great reliability.

US 6 029 720 A1 describes a filling means for evacuating and pressure-filling a liquid medium to a closed system, such as e.g. a cooling system for an internal combustion engine. The filling means consists of three primary parts, a manifold to connect hose connections to the filling means, an upper body containing valves, and a lower coupling unit with grippers and seals for connecting the filling means with the system. The three parts have connecting faces where they are to be interconnected, and medium channels and connecting channels for media and control air, respectively, for activating valves and grippers. Moreover, the filling means has fixing screws and operating buttons.

When the filling means is to be used for evacuating and pressure-filling a system, the filling means is placed over a stub on the system. The grippers in the coupling unit are activated by means of compressed air so that the filling means is connected tightly to the stub. Then, the system is evacuated by connection to a partial vacuum. A compression air-controlled valve then establishes a connection between the system and the medium which is to be filled. After a predetermined volume of medium has been filled, the filling valve closes, and finally the grippers are released so that the filling means may be removed from the stub of the system.

### The object of the invention

The object of the invention is to optimize the filling process additionally in that a levelling pipe in the coupling unit is connected to a channel in the valve housing and a levelling valve for establishing a further connection from the reservoir of the closed circuit through the valve housing and the operating part to a levelling unit.

The levelling itself takes place in that the circuit is filled completely with the medium. A slight amount of the medium is then sucked back before the circuit is closed. This allows the medium to expand in the circuit.

The levelling pipe and a filling valve are positioned in the coupling unit so that the filling valve and the levelling pipe are arranged with coinciding or intersecting centre lines (A-A).

The filling operation is optimized in this surprisingly simple manner.

When, as stated in claim 2, the valves are corresponding to the configuration of the valve housing, so that the connecting channels in the valve housing transfer medium and/or control pressure directly to the valve without further connections, it is ensured that the pressure and the medium may be transferred directly, without it being necessary to connect conduits to the individual valves.

The individual valves are, as disclosed in claim 3, expediently kept in place by securing means or by clamped-together faces in the individual subcomponents of the filling means, and an activation part of the valve is, as disclosed in claim 4, expediently provided with external threads allowing threaded mounting in the valve housing.

Another object is to provide a method of filling a medium, e.g. a cooling medium for a cooling system for a car, as stated in claim 5, by using a filling means according to the invention in which after filling the closed circuit completely and a predetermined pressure has been achieved, a levelling valve is activated, for establishing a further connection from the reservoir of the closed circuit through the valve housing and the operating part to a levelling unit, whereby a slight amount of the medium is sucked back before the circuit is closed.

The method involves filling of medium to a system of a given type which is simpler and more distinct for an operator. In addition to the above-mentioned cooling system for a car, such a system may be other containers or systems on a car which are to be filled with a medium. Examples include filling of engine oil, brake liquid, sprinkler liquid, gearbox oil, oil for power steering as well as other media for use in the automobile industry.

In those cases where the necessary filling pressure in an air-conditioning system is suitably low, it is likewise conceivable that a filling means according to the invention may be used.

Further, the filling means enable a low flow resistance (Kv value) and thereby a great flow through the filling valve and the levelling pipe. To achieve the best possible result, the valves are constructed such that they may be used for vacuum as well as pressure, while having a low Kv value and a great flow.

To give the best possible working conditions for the operator in the form of ergonomy and compact structure, the valve housing establishes a connection between operating part, valves and coupling unit for medium as well as connections to control pressure.

### The drawing

An example of a filling means according to the invention will be described more fully below with reference to the drawing, in which:
- fig. 1: shows a drawing of various subcomponents which may be assembled individually by means of a few securing means into a complete filling means comprising a plurality of valves,
- figs. 2a, 2b: show a sectional view of mutual medium connections between coupling, valve and operating part,
- figs. 3a, 3b: show the operating part with a connecting flange which establishes a connection to the valve housing containing medium connections and pneumatic connections. The operating part also contains operating means,
- figs. 4a, 4b: show the valve housing which establishes the connections between the medium supply of the operating part and the coupling unit and the pneumatic control channels,
- fig. 5a: shows the valve with valve seat, valve guide and pneumatic activation part, seen from the side,
- fig. 5b: shows the valve shown in figure 5a, seen in section,
- fig. 5c: shows the valve shown in figure 5a, seen in perspective, and
- figs. 6a, 6b: show the coupling unit with activated gripper means,

### Description of an exemplary embodiment

Embodiments of a filling means for transferring volatile liquids or gases according to the invention will be described below.

The filling means 1 is used for evacuating, pressure-filling and levelling (called process in the following) of liquids and/or gases (called medium in the following) in closed circuits by mounting on the reservoir (not shown) of the circuit.

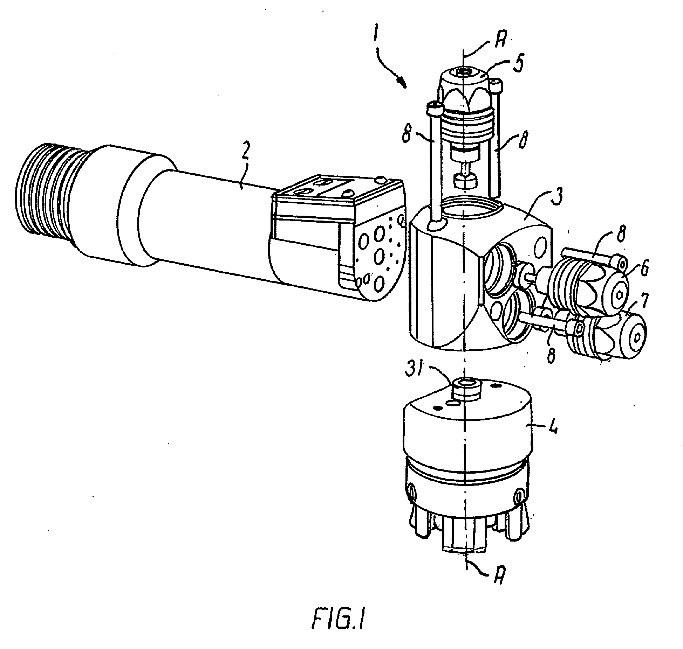

Figure 1 shows how the various subcomponents 2, 3, 4, 5, 6, 7 of the filling means 1 may be assembled by means of a few securing means 8 into a complete filling means 1 containing several valves 5, 6, 7. In a preferred embodiment, the filling means comprises three valves 5, 6, 7.

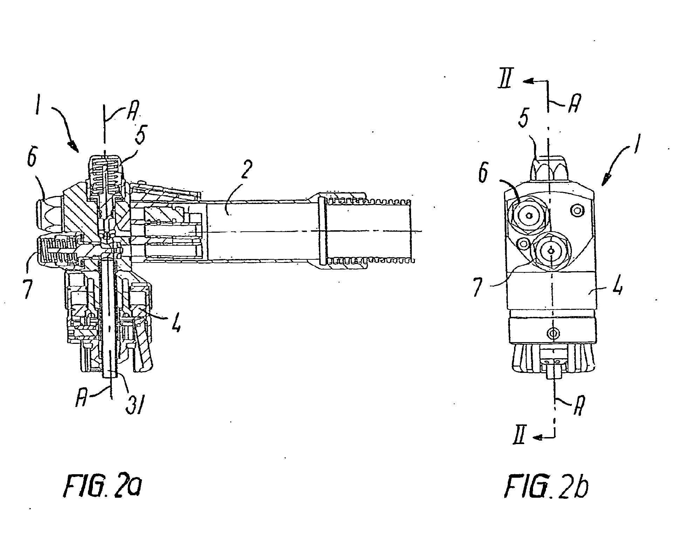

Figure 2a shows a sectional view of the filling means 1, seen in the direction II-II in fig. 2b, which shows the filling means 1 seen from the front, with mutual medium connections between the coupling unit 4, the valves 5, 6, 7, and the operating part 2. The operating part 2 also constitutes the connection of the filling means 1 to the circuit from which the filling liquid or gas is supplied.

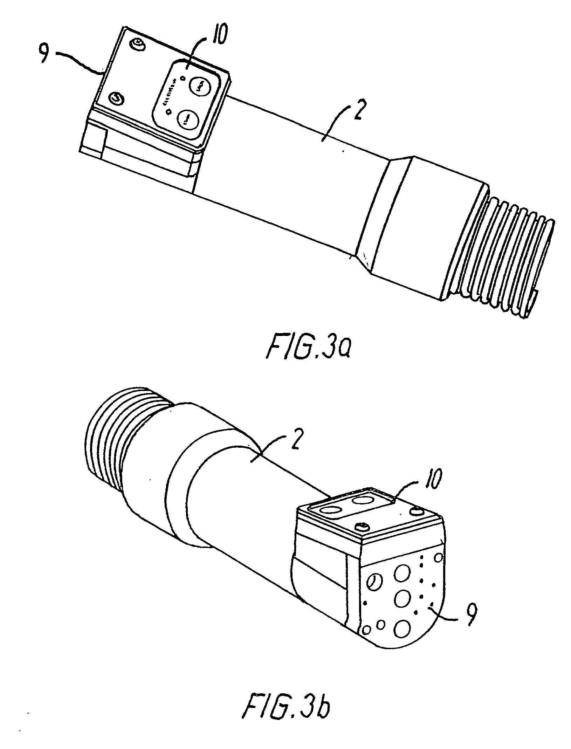

Figures 3a and 3b show the operating part 2 with a connecting flange 9 which establishes a connection to the valve housing 3 containing medium connections and pneumatic connections. The medium connections are the connections which transport the medium which is to be filled in cooling systems, systems for sprinkler liquid, engine (oil), brake liquid reservoir or the like. The operating part 2 also comprises operating means 10 with which the operator can operate the filling means 1.

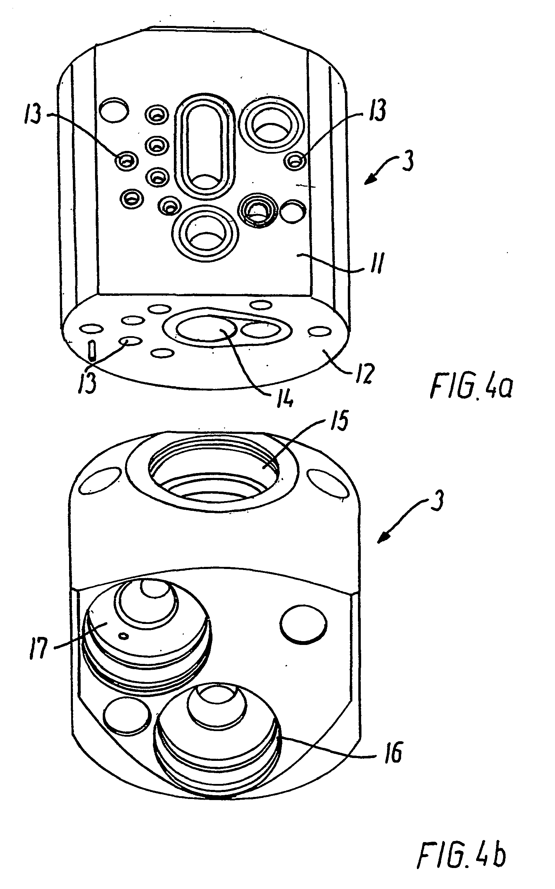

Figures 4a and 4b show the valve housing 3 which provide connecting faces 11, 12 for the medium supply of the operating part 2 and for the coupling unit 4 as well as for the valves 5. Pneumatic control channels 13 are provided in the connecting faces 11, 12. The upper side of the valve housing 3 is provided with an opening 15 for the mounting of a filling valve 5, and an opening 16 for the mounting of a levelling valve 7 is provided on the face of the valve housing 3 which faces away from the operating part 2. The valves 5, 7 for the filling and levelling of medium are connected such that the individual axial centre lines of the valves coincide with or intersect an axial centre line for a connection opening 14 for a levelling pipe 31 in the coupling unit 4 to ensure a large flow. An opening 17 for an evacuation valve 6 is provided in the valve housing 3.

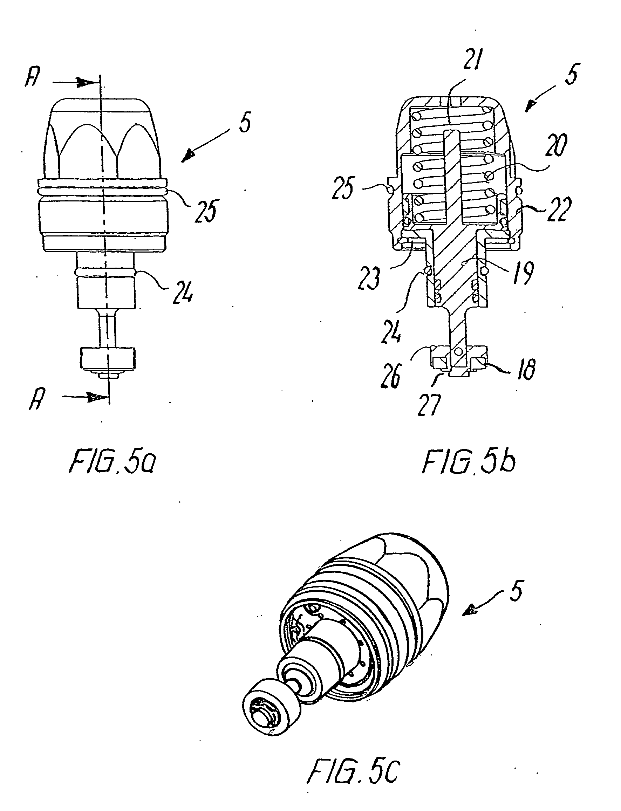

Figures 5a and 5b show one of the valves 5, 6, 7, here the filling valve 5 with a large valve seat 18, a valve guide 19 and a pneumatic activation part 20. The activation part 20 of the valve is provided with an indicator 21 for monitoring the position of the valve 5. The activation part 20 is provided with external threads 22 and a gasket 23 allowing threaded mounting. The valve guide 19 is provided with a gasket 24 which allows separation between medium and pneumatics. Further, a gasket 25 is arranged in the immediate vicinity of the key face of the valve. The valve seat 18 comprises a gasket retained in a gasket housing 26, and the gasket is secured with a locking device 27, e.g. a Seger ring.
   As the valve constitutes a unit with all gaskets mounted, the valve is not to be provided with further gaskets at replacement or mounting.

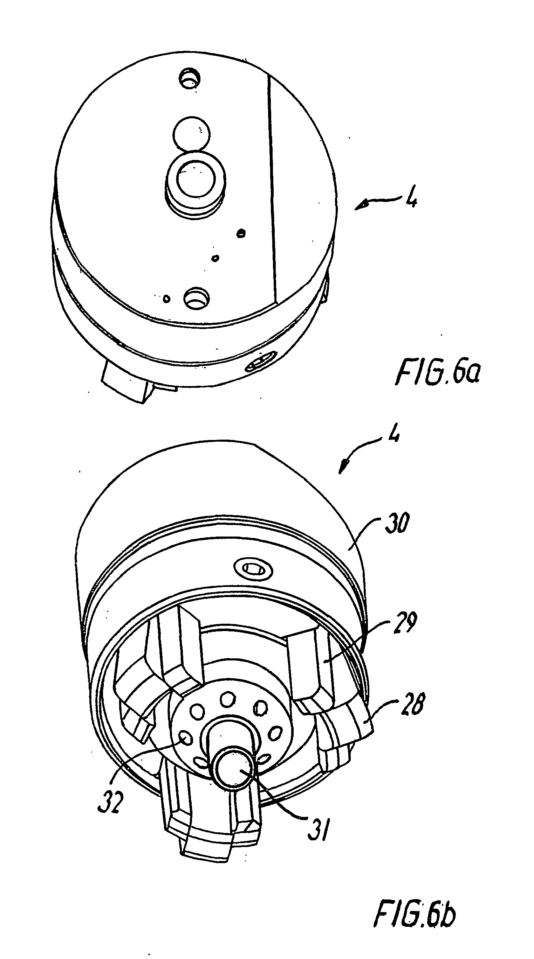

Figures 6a and 6b show the coupling unit 4 with pneumatically activated gripper means 28, said gripper means 28 being mounted in holders 29 and being controlled by the contour of the outer jacket 30 of the coupling unit 4. The levelling pipe 31 is positioned in the centre line A-A of the coupling unit 4. In this connection it is not so important that the levelling pipe extends in the centre line of the coupling. It is important, however, that the opening 14 in the valve housing 3, together with the filling valve 5 and the levelling valve 7 as well as the levelling pipe in the coupling unit 4, is positioned in the same plane as or coincides with or intersects axial centre lines A-A, as this ensures a low Kv value and a great flow through the filling valve and the levelling pipe.

In a preferred embodiment, the filling means 1 comprises four subcomponents, an operating part 2 with operating means 10, a valve housing 3, three valves 5, 6, 7 (there may be embodiments with a different number of valves which also fulfil the function of the filling means), and a coupling unit 4, which perform the following function in a process:

The coupling unit 4 of the filling means 1 is mounted on the reservoir of the circuit by gripper means 28 which engage threads or a collar on the reservoir. The activation and the positioning preferably take place by means of pneumatics. Evacuation of the circuit takes place in that a vacuum valve 6 in the valve housing 3 is activated, thereby establishing a connection from the reservoir through the evacuation valve 6 and the valve housing 3 and the operating part 2 to an evacuation unit. Once evacuation has been achieved, the vacuum valve is deactivated, and a new connection 32 is established from the reservoir through the valve housing 3 and the operating part 2 to a filling unit when the filling valve 5 is activated. When the circuit and the reservoir have been filled and have achieved a predetermined pressure, the filling valve 5 is deactivated, and a new connection is established from the reservoir of the closed circuit through levelling pipe 31, the valve housing 3 and the operating part 2 to a levelling unit when the levelling valve 7 is activated whereby a slight amount of the medium is sucked back. Once level has been achieved, the gripper means 28 of the coupling unit 4 are deactivated.
The individual activations and deactivations may take place by means of pneumatics, hydraulics, by means of electrical or magnetic activation/deactivation or by means of spring force.

The invention also ensures that the individual components in the structure of the filling means may be replaced, optionally by components having other characteristics to provide for media having other flow conditions.

Moreover, repairs, if any, may take place easily and relatively unproblem-atically, as the filling means may easily and readily be separated into its subcomponents, following which one or more of these may be replaced, and the filling means is assembled again.

To achieve great serviceability and reliability as well as easy separation of the individual components at repair or maintenance, the subcomponents of the filling means may be assembled by means of a few screws. The valves are constructed as integrated valves, where medium and pneumatic control air may be transferred without it being necessary to connect conduits to the valves themselves. The valves are thus arranged in the valve housings in such a manner that the configuration of the valves in cooperation with the configuration of the valve housing allows transfer of medium and of control air without further connections to the valve. The individual valves are kept in place by securing means or by clamped-together faces in the individual subcomponents of the filling means.

## Claims

1. A filling means for evacuating, pressure-filling and levelling a gas or
liquid for closed circuits, such as in cooling systems, said filling means (1) comprising :
an operating part (2) with operating means (10),
an evacuation valve (6), a filling valve (5) and a levelling valve (7),
a coupling unit (4) having means (31, 32) for transporting gas and/or liquid,
and being connectable to a reservoir of the closed circuit, and
a valve housing (3), said valve housing having:
one or more connecting faces (11, 12) for the coupling or clamping of the valves (5, 6, 7), the coupling unit (4) and the operating part (2),
internal pneumatic control channels (13), and
means for evacuating and filling of the closed circuits,
whereby the means for transporting gas and/or liquid to the coupling unit (4) comprises a levelling pipe (31), which is connected to a channel (14) in the valve housing (3) and to the levelling valve (7) for establishing a connection from the reservoir of the closed circuit through the valve housing (3) and the operating part (2) to a levelling unit for sucking a slight amount of the gas and/or liquid back through the filling means before the filling means are decoupled from the circuit and the circuit is closed, and whereby the levelling pipe (31) and the filling valve (5) are arranged with coinciding or intersecting centre lines.

2. A filling means according to claim 1, wherein one or more of the valves (5, 6, 7) corresponds to the configuration of the valve housing (3), so that the connecting channels (13) in the valve housing (3) transfer gas and/or liquid and/or control pressure directly to the valve (5, 6, 7) without further connections.

3. A filling means according to claim 1 or 2, wherein the individual valves (5, 6, 7) are kept in place by securing means or by clamped-together faces in the individual subcomponents of the filling means (1).

4. A filling means according to any of the claims 1-3, wherein an activation part (20) of the valve (5,6,7) is provided with external threads (22) allowing threaded mounting in the valve housing (3).

5. A method of evacuating, pressure-filling and levelling gas or liquid when filling closed circuits using a filling means according to any one of the preceding claims, comprising the steps of
evacuating liquids and/or gasses from the closed circuit by connecting the filling means to a vacuum or suction unit connected to the evacuation valve (6),
establishing a connection to a filling media reservoir through the filling valve (5) and filling the closed circuit and a reservoir of the closed circuit, deactivating the filling valve (5) after filling of the closed circuit and the reservoir of the closed circuit,
**characterized in that** after filling the closed circuit completely and a predetermined pressure has been achieved, a levelling valve (7) is activated, for establishing a further connection from the reservoir of the closed circuit through the valve housing (3) and the operating part (2) to a levelling unit, whereby a slight amount of the gas and/or liquid is sucked back before the circuit is closed .

6. A method according to claim 5, **characterized in that** gripper means (28) of the coupling unit (4) are deactivated, and the filling means (1) is released from the filling when the levelling is completed.

## Patentansprüche

1. Fülleinrichtung zum Entleeren, Füllen unter Druck und Ausgleichen eines Gases oder einer Flüssigkeit für geschlossene Kreisläufe, wie beispielsweise in Kühlsystemen, wobei die Fülleinrichtung (1) umfasst:
einen Betätigungsteil (2) mit einer Betätigungseinrichtung (10),
ein Entleerungsventil (6), ein Füllventil (5) und ein Ausgleichsventil (7),
eine Kopplungseinheit (4) mit Einrichtungen (31,32) zum Transportieren von Gas und/oder Flüssigkeit, die mit einem Vorratsbehälter des geschlossenen Kreislaufs verbunden werden kann, und
ein Ventilgehäuse (3), wobei das Ventilgehäuse aufweist:
eine oder mehrere Anschlussflächen (11, 12) für das Koppeln oder Festklemmen der Ventile (5,6,7), der Kopplungseinheit (4) und des Betätigungsteils (2),
interne pneumatische Steuerkanäle (13); und
eine Einrichtung zum Entleeren und Füllen der geschlossenen Kreisläufe,
wobei die Einrichtung zum Transportieren von Gas und/oder Flüssigkeit zu der Kopplungseinheit (4) ein Ausgleichsrohr (31) umfasst, das mit einem Kanal (14) in dem Ventilgehäuse (3) und dem Ausgleichsventil (7) verbunden ist, um eine Verbindung von dem Vorratsbehälter des geschlossenen Kreislaufs über das Ventilgehäuse (3) und den Betätigungsteil (2) zu einer Ausgleichseinheit herzustellen und eine geringe Menge des Gases und/oder der Flüssigkeit über die Fülleinrichtung zurückzusaugen, bevor die Fülleinrichtung von dem Kreislauf entkoppelt wird und der Kreislauf geschlossen wird, und das Ausgleichsrohr (3) sowie das Füllventil (5) mit sich deckenden oder schneidenden Mittellinien angeordnet sind.

2. Fülleinrichtung nach Anspruch 1, wobei eines oder mehrere der Ventile (5,6,7) dem Aufbau des Ventilgehäuses (3) so entspricht/entsprechen, dass die Verbindungskanäle (13) in dem Ventilgehäuse (3) Gas und/oder Flüssigkeit und/oder Steuerdruck ohne weitere Verbindungen direkt zu dem Ventil (5,6,7) leiten.

3. Fülleinrichtung nach Anspruch 1 oder 2, wobei die einzelnen Ventile (5,6,7) durch Sicherungseinrichtungen oder zusammengeklemmte Flächen in den einzelnen Teilekomponenten der Fülleinrichtung (1) festgehalten werden.

4. Fülleinrichtung nach einem der Ansprüche 1 - 3, wobei ein Aktivierungsteil (20) des Ventils (5,6,7) mit Außen-Gewindegängen (22) versehen ist, die Einschrauben in das Ventilgehäuse (3) ermöglichen.

5. Verfahren zum Entleeren, Füllen unter Druck und Ausgleichen von Gas oder Flüssigkeit beim Füllen geschlossener Kreisläufe unter Verwendung einer Fülleinrichtung nach einem der vorangehenden Ansprüche, wobei das Verfahren die folgenden Schritte umfasst:
Entleeren von Flüssigkeiten und/oder Gasen aus dem geschlossenen Kreislauf durch Verbinden der Fülleinrichtung mit einer Vakuum- oder Saugeinheit, die mit dem Entleerungsventil (6) verbunden ist,
Herstellen einer Verbindung mit einem Füllmedien-Vorratsbehälter über das Füllventil (5) und Füllen des geschlossenen Kreislaufs und eines Vorratsbehälters des geschlossenen Kreislauf,
Deaktivieren des Füllventils (5) nach Füllen des geschlossenen Kreislaufs und des Vorratsbehälters des geschlossenen Kreislaufs,
**dadurch gekennzeichnet, dass**
nach vollständigem Füllen des geschlossenen Kreislaufs und Erreichung eines vorgegebenen Drucks ein Ausgleichsventil (7) aktiviert wird, um eine weitere Verbindung von dem Vorratsbehälter des geschlossenen Kreislaufs über das Ventilgehäuse (3) und den Betätigungsteil (2) zu einer Ausgleichseinheit herzustellen, so dass eine geringe Menge des Gases und/oder der Flüssigkeit zurückgesaugt wird, bevor der Kreislauf geschlossen wird.

6. Verfahren nach Anspruch 5, **dadurch gekennzeichnet, dass** Greifeinrichtungen (28) der Kopplungseinheit (4) deaktiviert werden und die Fülleinrichtung (1) von dem Füllen entbunden wird, wenn das Ausgleichen abgeschlossen ist.

## Revendications

1. Moyen de remplissage permettant d'évacuer, de remplir par pression et de mettre à niveau un gaz ou un liquide pour des circuits fermés, tel que dans des systèmes de refroidissement, ledit moyen de remplissage (1) comprenant :
une partie de fonctionnement (2) avec des moyens de fonctionnement (10),
une soupape d'évacuation (6), une soupape de remplissage (5) et une soupape de mise à niveau (7),
une unité de couplage (4) ayant des moyens (31, 32) permettant de transporter du gaz et/ou du liquide et pouvant être raccordée à un réservoir du circuit fermé, et
un logement de soupape (3), ledit logement de soupape ayant :
une ou plusieurs faces de raccordement (11, 12) pour le couplage ou le serrage des soupapes (5, 6, 7), de l'unité de couplage (4) et de la partie de fonctionnement (2),
des canaux de commande de pneumatique internes (13), et
un moyen permettant d'évacuer et de remplir les circuits fermés,
moyennant quoi le moyen permettant de transporter le gaz et/ou le liquide vers l'unité de couplage (4) comprend un tuyau de mise à niveau (31), qui est raccordé à un canal (14) dans le logement de soupape (3) et à la soupape de mise à niveau (7) afin d'établir un raccordement depuis le réservoir du circuit fermé à travers le logement de soupape (3) et la partie de fonctionnement (2) vers une unité de mise à niveau afin d'aspirer une petite quantité du gaz et/ou liquide en retour à travers le moyen de remplissage avant que les moyens de remplissage soient découplés du circuit et que le circuit soit fermé, et moyennant quoi le tuyau de mise à niveau (31) et la soupape de remplissage (5) sont agencés avec des lignes centrales coïncidant ou se croisant.

2. Moyen de remplissage selon la revendication 1, dans lequel une ou plusieurs des soupapes (5, 6, 7) correspondent à la configuration du logement de soupape (3), de sorte que les canaux de raccordement (13) dans le logement de soupape (3) transfèrent du gaz et/ou liquide et/ou la pression de commande directement vers la soupape (5, 6, 7) sans raccordement supplémentaire.

3. Moyen de remplissage selon la revendication 1 ou 2, dans lequel les soupapes individuelles (5, 6, 7) sont maintenues en place par des moyens d'arrimage ou par des faces serrées ensemble dans les sous-composants individuels du moyen de remplissage (1).

4. Moyen de remplissage selon l'une quelconque des revendications 1 à 3, dans lequel une partie d'activation (20) de la soupape (5, 6, 7) est dotée de filetages externes (22) permettant le montage fileté dans le logement de soupape (3).

5. Procédé d'évacuation, de remplissage par pression et de mise à niveau de gaz ou de liquide lors du remplissage de circuits fermés utilisant un moyen de remplissage selon l'une quelconque des revendications précédentes, comprenant les étapes consistant à
évacuer des liquides et/ou gaz du circuit fermé en raccordant le moyen de remplissage à une unité de vide ou d'aspiration raccordée à la soupape d'évacuation (6),
établir un raccordement vers un réservoir de milieu de remplissage à travers la soupape de remplissage (5) et remplir le circuit fermé et un réservoir du circuit fermé,
désactiver la soupape de remplissage (5) après remplissage du circuit fermé et du réservoir du circuit fermé,
**caractérisé en ce qu'**après que le circuit fermé est complètement rempli et qu'une pression prédéterminée a été atteinte, une soupape de mise à niveau (7) est activée, afin d'établir un raccordement supplémentaire depuis le réservoir du circuit fermé à travers le logement de soupape (3) et la partie de fonctionnement (2) vers une unité de mise à niveau, moyennant quoi une petite quantité du gaz et/ou liquide est aspirée en retour avant que le circuit soit fermé.

6. Procédé selon la revendication 5, **caractérisé en ce que** les moyens de préhension (28) de l'unité de couplage (4) sont désactivés, et le moyen de remplissage (1) est libéré du remplissage lorsque la mise à niveau est achevée.
